# EUROPEAN PATENT APPLICATION

(11) **EP 2 533 118 A1**
(43) Date of publication of application: **12.12.2012**
(21) Application number: 11169544.1
(22) Date of filing: 10.06.2011
(51) Int. Cl.: G05B 23/02

(54) **An alarm management system installed on a site for managing alarm source components**

(71) Applicant: SIEMENS AKTIENGESELLSCHAFT, 80333 München (DE)
(72) Inventor: Gehrke, Thomas, 38102 Braunschweig (DE); Mazzimini, Gianluca, 24040 Bottanuco (BG) (IT)
(74) Representative: Fischer, Michael

(57) **Abstract**

The present invention relates to an alarm management system (AMS) installed on a site for managing alarm source components (ASC), comprising:
a) at least one alarm source component (ASC) installed on the site; said alarm source component (ASC) being configured to create an alarm source notification (COSA) when the alarm source component (ASC) identifies a fulfilment of one of a number of pre-defined alarm-types;
b) an alarm service business logic component (AS_BL) processing the incoming alarm source notifications (COSA) from the alarm source component (ASC) and outgoing alarm notifications (COA) to an alarm client component (AC) and being responsible for invoking a pertinent alarm state machine (ASM) when changes in an alarm source notification (COSA) occur;
c) an alarm service component (AS) comprising a number of alarm state machines (ASM) which are designed as a pluggable component ensuring an adaptability of the alarm service (AS); said alarm state machines (ASM) having an individual representation being stateless since the information of interest in the alarm state machines (ASM) is stored in alarm object instances; further comprising an alarm service configuration file being adjustable in order to implement and plug-in the alarm state machine components (ASM); and
d) a managed object component (MOC) being used as a repository for both the alarm types and the alarm object instances, comprising alarm related information generated by the alarm source component (ASC) and being represented by an alarm service object thereby acting as dispatcher for notifying changes in the alarm object.

## Description

The invention relates to an alarm management system installed on a site for managing alarm source components.

One important aspect in the field of building technologies and other business domains is a reliable and fast detection of events occurring in various parts of a site. The events differ in their cause and importance and are detected by a variety of sensors and devices, each type of sensor being designed for a special event type. Examples of events are: fire, smoke, intrusion, water leak. Therefore, a variety of types of detector objects exist, like fire detectors, motion detectors, etc. A wide-spread solution to monitor the events is by installing cameras throughout the site, such that especially sensitive environments, like high-security access points, can be surveyed. Data, like still images or live video transmitted from the cameras are collected into a central surveillance entity like a management station, where they are monitored in real time and recorded for backup purposes. A problem related to this solution is the complexity of such systems, especially systems covering large sites, thus requiring a high amount of cameras and detection objects. All surveyed areas can hardly be monitored at once, thus, in many cases, views of the surveyed areas are shown sequentially on monitoring means. This fact introduces delays between subsequent views of a same surveyed area resulting in a late reaction to an event which occurred in that area.

In particular, the alarm service is a core component in building technology management systems. An platform used for this management task would like to be used by a business unit that wants to build a product for managing either simply and complex systems including the alarm management. In accordance with the product used, the target site and the system discipline, the alarm management might be very different (e.g. fire alarm noticed by a smoke detector in a danger management system requires a different treatment compared to light fault detected by train's car in a transportation system).

Therefore, the implementation of a unique and hard-coded alarm state machine is not sufficient for covering the desired platform requirements. Unfortunately, the presently existing products comprise hard-coded solutions having minor flexibility and the problem arising thereof can be solved in two ways:
a) the use of a standard product: The alarm management is unique in the system, and if there is a need to make any modifications it is made with the aid of adapters and adjustment in the existing code, and so a new version of the product is released to the market,
b) the use of a special product: An ad-hoc software solution is implemented solely for a specific product/customer.

Both options are not completely satisfying since the first option causes problems with the number of releases that are available after short-term and the second option causes nonflexible proprietary solutions.

It is therefore an objective of the present invention to provide an alarm management system installed on a site for managing alarm source components that offers a large flexibility in scale and in variety of alarm source components thereby coincidentally avoiding the need for extensive hard-code software programming efforts.

This objective can be achieved according to the present inventions by an alarm management system installed on a site for managing alarm source components, comprising:
a) at least one alarm source component installed on the site; said alarm source component being configured to create an alarm source notification when the alarm source component identifies a fulfilment of one of a number of pre-defined alarm-types;
b) an alarm service business logic component processing the incoming alarm source notifications from the alarm source component and outgoing alarm notifications to an alarm client component and being responsible for invoking a pertinent alarm state machine when changes in an alarm source notification occur;
c) an alarm service component comprising a number of alarm state machines which are designed as a pluggable component ensuring an adaptability of the alarm service; said alarm state machines having an individual representation being stateless since the information of interest in the alarm state machines is stored in alarm object instances; further comprising an alarm service configuration file being adjustable in order to implement and plug-in the alarm state machine components; and
d) a managed object component being used as a repository for both the alarm types and the alarm object instances, comprising alarm related information generated by the alarm source component and being represented by an alarm service object thereby acting as dispatcher for notifying changes in the alarm object.

This system provides an alarm service business logic component that is able to handle the pluggable alarm state machine components. Precisely, a standard alarm state machine component for handling most of the alarm source notification can be provided accompanied by one or more customized alarm state machine components for handling distinct type of alarms (distinct alarm types). Such components can be implemented and plugged by just adjusting the alarm service configuration file without the need of changing the existing code of the alarm service business logic component.

In order to satisfy the demand for a sufficient flexibility in the customization phase, a preferred embodiment of the present invention will provide an interface of the alarm state machines providing at least one method for:
a) triggering an alarm processing state being used to process operation requests defined by an alarm service client;
b) triggering an alarm source state being used to process alarm source notifications;
c) triggering an alarm treatment state being used to process treatment requests coming from the alarm service component;
d) handling both standard and custom operation requests;
e) getting applicable commands for both the alarm source and the alarm type;
f) getting new alarm state; and
g) getting initial and final states being used by the alarm service business logic component since each alarm state machine might have different state values for representing the initial and final state.

These measures allows to configure the alarm state machine components in accordance with the individual need for adapting the alarm service business logic component to the circumstances of the operating conditions in the site without touching at all part of the alarm service business logic component.

In the present invention, the alarm service business logic component takes advantage of operating procedures for treating the alarm events by means of a predefined workflow, including which part of a treatment users are expected to do, and when they are supposed to do it. Therefore, the system further comprises an operating procedure business logic component that manages at least one operating procedure which enables an arbitrary combination of the alarm management of different alarm source components. Therefore, the operating procedure enables interconnection/meshing of alarm services that would be loosely coupled without the design of the operating procedure business logic. Thereby, services are brought together that have an intentional logical/ functional relationship among each other. In order to suffice on the demand of flexibility within the system, a preferred embodiment of the present invention provides for the operation of the operating procedure business logic component by pluggable operating procedure state machine components.

In complex systems, the alarm management system has to fulfil the need for aggregating alarms and for managing the communication of the alarm source notifications throughout the communication nodes in the alarm management system. Therefore, a further preferred embodiment of the present invention is realized when the alarm service business logic component comprises an alarm hierarchy service; said alarm hierarchy service being enabled to aggregate alarm source notifications and to generate summery alarms by using directed acyclic graph topologies. Therefore, it is further advantageous when the alarm service hierarchy supports the supply of alarm state machines which determine the aggregation of the alarm source notifications and the propagation thereof within the alarm service business logic component. The collection, the aggregation and the propagation of the alarm source notifications can therefore be changed in a simple way just by modifying/replacing the pluggable alarm hierarchy state machine component. A default plug-in can be provided though custom ones can be easily added by the final user/business unit. The alarm hierarchy service is further able to handle a bundle of hierarchies which means multiple hierarchies can be managed simultaneously.

Usually, in the existing products it is rather difficult to add a new alarm source component which usually requires a replacement of the software components implementing the alarm service which generally necessitates to stop the alarm service business logic. To avoid these drawbacks, a further preferred embodiment of the present invention will decouple the alarm source component and the alarm service business logic component by designing the alarm service configuration file in a way that it is further adjustable to comprise the configuration file of the alarm source components. In a further advantageous alternative of the present invention, the alarm source components are configured in the alarm service business logic component thereby enabling to add and/or remove an alarm source component by downloading an amended configuration file of the alarm source components without restarting the service or the entire system.

Features and advantages of the present invention will become more apparent from the following detailed description in conjunction with the following figures and example, whereby:
- Figure 1:: schematically shows the architecture of a sys-tem to manage alarm event in a building con-trol system;
- Figure 2:: schematically shows a screen-shot of a mask to configure alarm state machine components which are used in the alarm management system as shown in Figure 1;
- Figure 3:: schematically shows the architecture of the operating procedure service coupled to the alarm service component;
- Figure 4:: schematically shows the architecture of the alarm hierarchy component being used in the alarm management system; and
- Figure 5:: schematically shows hierarchic organisation of the alarm hierarchy component.

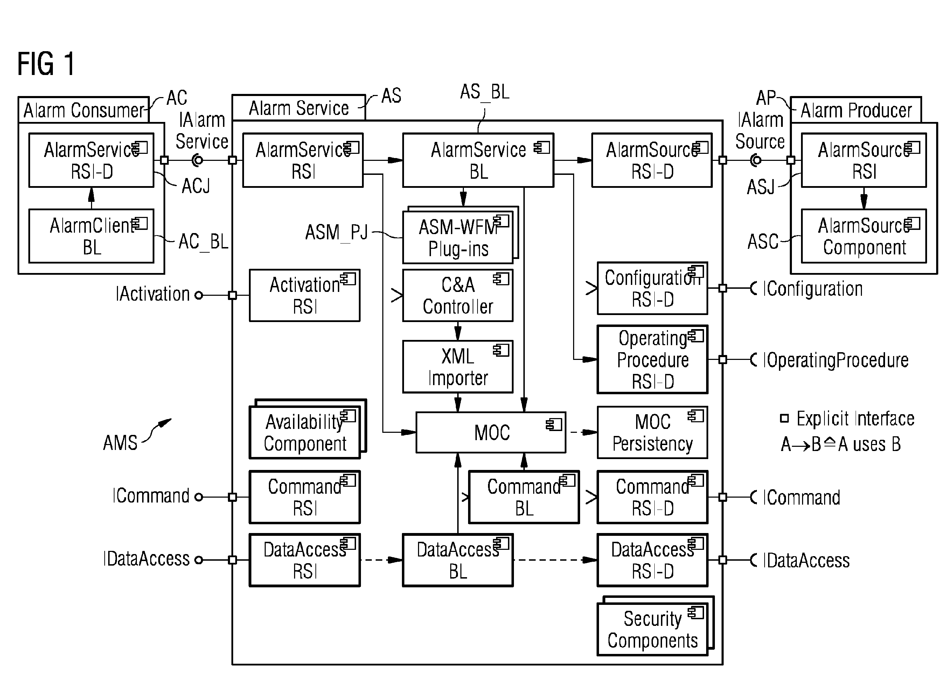

Figure 1 shows schematically the architecture of an alarm management system AMS comprising an alarm consumer/client AC, an alarm service AS and at least one alarm producer AP. The alarm consumer AC is the client that subscribes to the alarm service AS. The alarm consumer AC comprises an alarm consumer business logic AC_BL and an alarm consumer interface ACI that substantially is the interface for interacting with the alarm service AS. The alarm consumer business logic AC_BL comprises all the software routines that are required to receive and represent alarm notifications to the extent both authorized and desired. The alarm consumer is typically executed on a personal computer, laptop, PDA, mobile display, mobile phone and the like.

The alarm producer AP comprises an alarm source component ASC, such as a smoke detector, intrusion detector, motion detector, gas sensor, humidity detector or the like, and a respective alarm source interface ASI for the communication with the alarm service AS.

The alarm service AS comprises as core components an alarm service business logic AS_BL, at least one alarm state machine component ASM with an respective alarm state machine plug-in ASM_PI where the alarm state machine components can be plugged in, and a managed object component MOC. The alarm service business logic AS_BL is a software routine that handles any type of alarm source notification and the processing thereof. The alarm service business logic AS_BL is further able to handle the pluggable alarm state machine components ASM. The alarm service business logic AS_BL processes incoming alarm source notifications (COSA) form the alarm source components ASC and the outgoing alarm notifications (COA) to the alarm consumer/client AC. It further processes any incoming operation request which is a command or an operation from the alarm consumer/client AC and the outgoing operation requests to the alarm source components ASC. Besides these tasks, the alarm service business logic AS_BL is responsible for invoking the pertinent alarm state machine ASM when changes in the alarm occur.

The alarm state machine component ASM is the pluggable component that can be used to control the alarm lifecycle. A reference alarm state machine is provided to the alarm service AS, but an arbitrary and optional number of customized alarm state machines can be added. Since the alarm state machine components ASM are implemented as plug-ins to assure the adaptability of the alarm service AS to different user's concepts and needs. Its representation is stateless since all the information of interest in the alarm state machine is stored in alarm instances. The alarm state machine components ASM receive all the alarm related information from the alarm service business logic AS_BL as input parameters and operates with them according to the state diagram changing their value if required by the ASM-specific alarm related rules. An alarm state machine then delivers this value back to the alarm service business logic AS_BL which stores the values in the managed object component MOC.

The managed object component MOC is used as a data repository for managing both the alarm type information and the alarm object instance information (alarm objects generated at runtime). The managed object component MOC further comprises alarm related information generated by the alarm source components ASC und represented by an alarm service object extension (ASOE) which represent themselves static and dynamic attribute of an alarm source notification. It further acts as a dispatcher for notifying changes in the alarm objects.

The alarm state machine component ASM is made pluggable by means of the configuration of the alarm management system AMS and the configuration of the alarm service AS therein. At engineering level, the alarm service types can be changed that are linked to the alarm state machines during runtime. When an alarm object is created, such an alarm is associated to the proper alarm state machine component ASM by means of the alarm type the alarm refers to.

Essentially in this context, the interface of the alarm state machine components provides methods for:
a) triggering an alarm processing state being used to process operation requests defined by an alarm service client;
b) triggering an alarm source state being used to process alarm source notifications;
c) triggering an alarm treatment state being used to process treatment requests coming from the alarm service component;
d) handling both standard and custom operation requests;
e) getting applicable commands for both the alarm source component and the alarm type;
f) getting new alarm state; and
g) getting initial and final states being used by the alarm service business logic component since each alarm state machine might have different state values for representing the initial and final state.

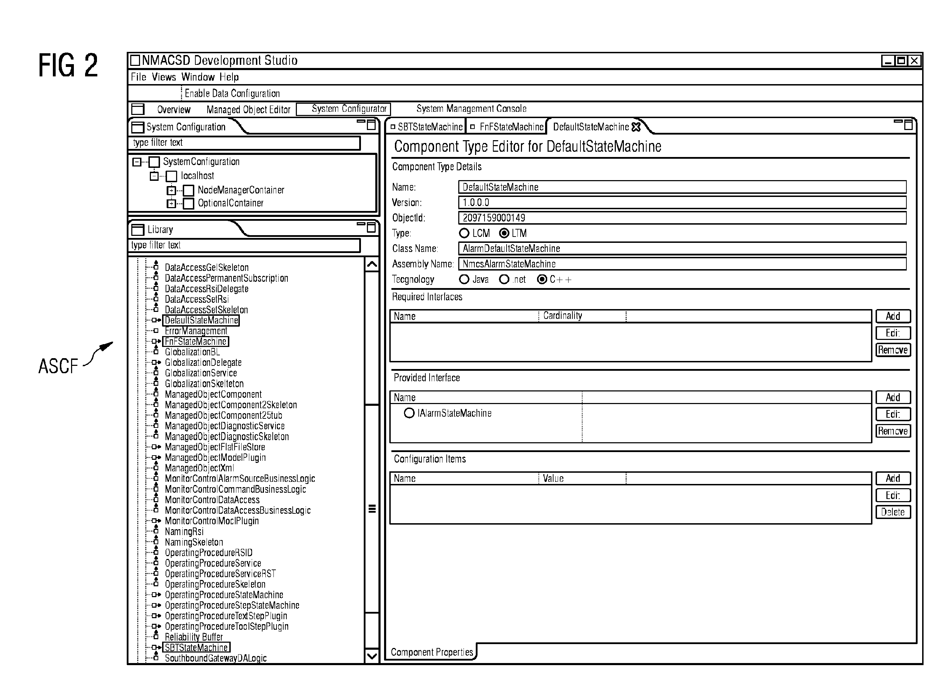

Figure 2 schematically show in the schema of a MS Windows® page an example of the alarm service configuration file ASCF, hereinafter referred to as system configuration file. The system configuration file comprises three distinct alarm state machine components: DefaultStateMachine, FnFStateMachine and SBTStateMachine. Using the respective development studio, it is possible to add new alarm state machine components, and remove and/or modify existing alarm state machine components ASM. In the illustrated example, the displayed mask gives a self-explaning structure of the configuration options for the alarm state machine component as well as for any other state machine that will be mentioned below. The present example shows a default alarm state machine but other alarm state machine component can be configured in a customizable way, such as the FnFStateMachine or the SBTStateMachine. Each alarm state machine instance must have a distinct name, but all of them shall provide the IAlarmState-Machine interface.

Therefore, the present invention provides the following advantages to the final users of the alarm service AS. The final user has a quick and clean way for supporting a new alarm type that requires a specific management. Further, the new alarm management system AMS allows for a varied alarm handling approach through an unique alarm service (AS) and one or more flexible, inter-changeable and pluggable alarm state machine components ASM. Furthermore, this system allows for re-using the alarm service AS on a variety of domains as well as disciplines.

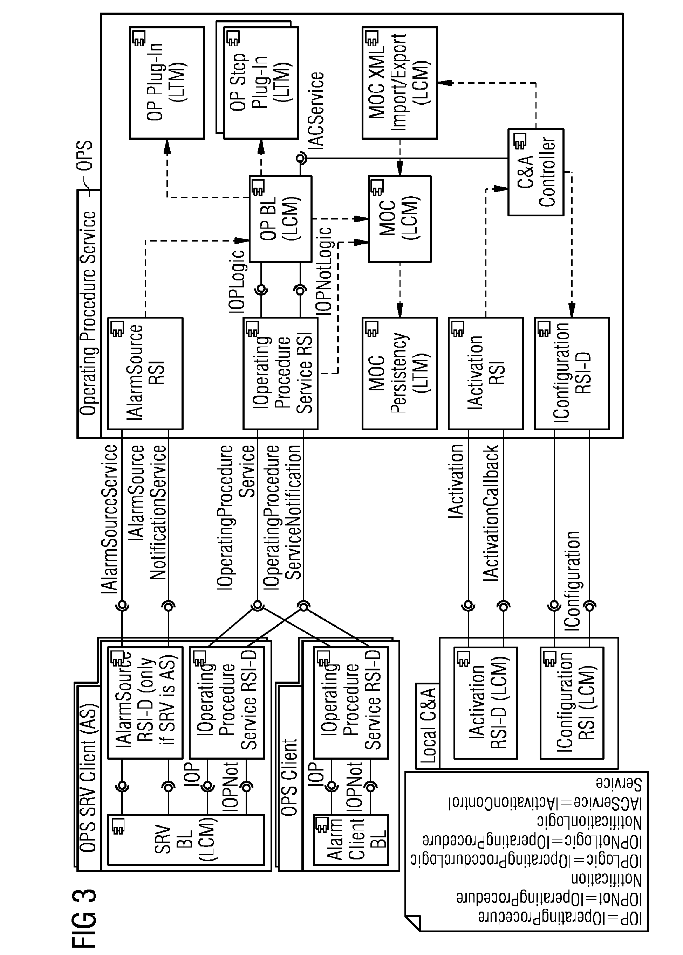

Figure 3 now provides a schematic overview on the architecture of the above-mentioned operating procedure service OPS which combines workflow techniques with SOA techniques. The operating procedure OP enables interconnecting/meshing of arbitrary services, such as the alarm service AS, that would be otherwise only loosely coupled with it. This feature allows to bring together services that have a logical/functional relationship with each other.

Therefore, the operating procedure service OPS has a similar architecture like the alarm management system AMS of Figure 1 or in other words, the distinct services, such as the alarm service AS, are created in the environment of the provided operating procedure service OPS. Of course, different services can use the same hardware components such as the MOC as repository. In the following the important part of the Operating Procedure Service OPS are explained shortly:
a) Operating procedure business logic OP BL: This component is responsible for managing the operating procedure instances, controlling their lifecycles and execution;
b) Operating procedure plug-in OP Plug-In: This component is responsible for handling the operating procedure state machine components, a default implementation is provided, but customs ones can be produced by the final user according to his needs and requirements;
c) Operating procedure RSI/RSI-D: These components provide service and client operations respectively to all subscribed operating service clients (for example the alarm clients);
d) Operating procedure tool (engineering-side): This component is responsible for configuring the operating procedure types and instances at runtime respectively;
e) Operating procedure Instruction plug-ins (service-side): These components implement the specific function related to each instruction;
f) Operating procedure instruction snap-ins (client-side): These components implement the specific user interface related to each instruction; and
g) Operating procedure Instruction tool (engineering-side): This component is responsible for configuring the operating procedure instruction profiles.

An Operating Procedure instance is associated with, for instance, an alarm through its alarm type, and can be engineered specifying the number of operating instructions that compose the alarm service procedure, the execution order, the operating instruction execution type and other attributes that control its behaviour.

The following summary will explain in more detail the function of the diverse functional block in Figure 3.

Operation procedure service OPS has the responsabilites to allow OP consumers (typically alarm service consumer AC) to create, delete and subscribe to Operating procedure instances. It further allows to Operating procedure client applications to subscribe and execute an Operating procedure instance by means of an individually configurable workflow and it furthermore provides support for the automatic execution of Operating procedure steps. Its collaborations exist with the Operating procedure service consumer which connects to the IOperatingProcedure for creating and deleting OP instances and with the Operating Procedure Service client which connects to the IOperating Procedure (I=Interface) for controlling an OP instance execution and for getting OP notifications.

| | |
|---|---|
| Operating Procedure Business Logic OP BL | Operating Procedure is a mandatory com-ponent that is used to manage workflows for assisted alarm treatment which is defined as a sequence of treatment and inspection steps, each representing one task that the user has to perform or the system automatically executes to treat an alarm. The operating procedure business logic support multiple steps (as plug-ins) . |
| Operating Procedure RSI | The role-specific Operating procedure interface is a mandatory component which is used to handle operating pro-cedure notifications and the corre-sponding subscription sessions to the client. The clients can also send com-mands that control the operating proce-dure executions by means of this inter-face. |
| Operating Procedure plug-in | The Operating Procedure state machine is a mandatory component which is in charge of handling the operating proce-dure instance states. It is realized as a plug-in so as to be adjusted/replaced by a final user. |
| Operating Procedure Step plug-in | The operating procedure step is an op-tional component which is in charge of executing a specific step of the oper-ating procedure workflow, for instance view a map, send an SMS or e-mail, dis-play CCTV video, and so forth. These components are implemented as plug-ins to ensure the adaptability of the Oper-ating Procedure to different final user concepts. |
| Managed Object Com-ponent (MOC) | The MOC mandatory component manages OP objects like OP types, OP step types, and OP instances created at runtime. |
| MOC persistency | An optional component that persists managed objects. |
| Alarm Source RSI | The role-specific Alarm Source inter-face is a mandatory component which is used for creating alarms related to un-expected behaviour on OP execution. |
| Activation RSI | The role-specific Activation Interface is a mandatory component which is used to activate a specific version of a configuration (of an alarm service, for example). |
| Configuration RSI-D | The Alarm Source uses the mandatory Configuration delegate interface which gets access to its runtime configura-tion data from the local C&A service. The configuration data are cached lo-cally in the service through the C&A controller. |
| C&A controller | The C&A controller (CAC) is a mandatory component which manages all activities regarding the changes of a service con-figuration inside a service itself. Called by the IActivation Interface of C&A service, it gets files via ICon-figuration interface delegate, sets off the preparation of a new configuration, its rollbacks or commits it. |
| MOC XML Importer | The MOC XML Importer creates new trans-action, imports new configuration data into MOC, commits and close transac-tions. |

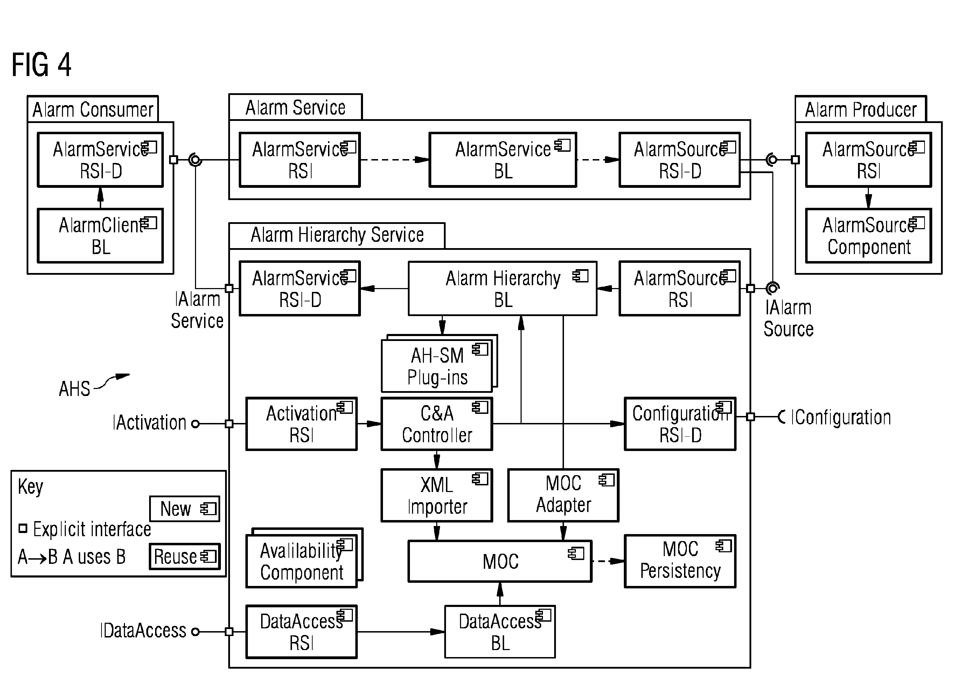

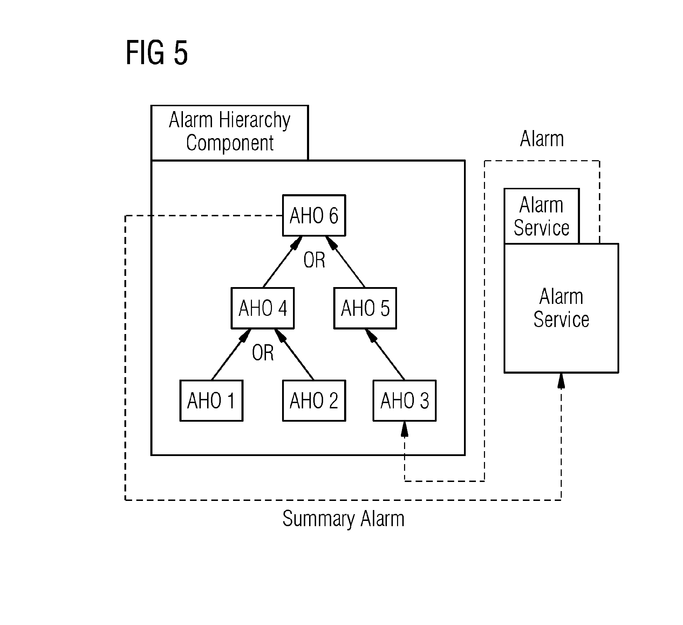

Figure 4 schematically illustrates the architecture of an Alarm hierarchy Service AHS that is constructed similar to the architecture of the Operating Procedure Service OPC and the alarm service AS. The alarm hierarchy service AHS is an important, but optional, feature with the alarm service AS and makes allowance for the aggregation of alarm information (i.e. simple COA alarm notification coming from the Alarm Service AS) and the generation of summary alarms (i.e. summary COSA alarm source notification going to the Alarm Service AS) by using directed acyclic graph topologies as illustrated in Figure 5. Besides that, the alarm hierarchy service AHS supports the capability to supply pluggable components to the alarm hierarchy business logic which decides how alarm information is aggregated and disseminated at each node.

According to the present solution, the alarm hierarchy service AHS implements a virtual alarm service in charge of collecting different alarms on different hierarchy levels by subscribing to the respective alarms generated by alarm service instances; thereby acting as an agent delivering a collection of aggregated alarms transparently to the alarm service clients AC.

Therefore, the present alarm hierarchy service AHS offers the following advantages to the final users. The collection, aggregation and propagation of the alarm instances can be changed in an easy way by modifying/replacing the pluggable alarm hierarchy state machine. As for the alarm service AS and the operating procedure service OP, a default plug-in for the alarm hierarchy state machine is provided though custom ones can be easily added by the final user. The alarm hierarchy service AHS is able to handle a bunch of hierarchies which means multiple hierarchies can be managed the same time by an appropriate design of the alarm hierarchy state machines. Further, the performances of the alarm service AS are not affected by any alarm hierarchy elaboration since the entire process takes place in a distinct service.

Single alarms can raise summary alarms, e.g. to indicate that a certain component of an alarm source is defect. It is also possible to combine single alarms into summary alarms. Fig. 5 shows an exemplary handling of summary alarms. Summary alarms are generated using alarm hierarchies. Alarm hierarchies are maintained in a specific Alarm Hierarchy Component. This component is connected to the Alarm Service as an alarm client, i.e. the Alarm Hierarchy Component subscribes to the alarms and receives the corresponding alarm events from the Alarm Service. The Alarm Hierarchy Component contains one or several alarm hierarchies. An alarm hierarchy consists of a directed acyclic graph of alarm hierarchy objects (AHOs).

If a alarm is received from the Alarm Service, it is mapped to the AHOs which represents the alarm at the lowest levels in the hierarchies (AHO 3 in Fig.5). The AHOs of each level the of the alarm hierarchy are connected to the next upper level by logical relationsships (e.g. the boolean operators "and", "or" or "xor"). In accordance with these relationships, the alarm is propagated through the different levels of the hierarchies. At each level, the AHO can raise a summary alarm that is sent to the Alarm Service. In this sense, the Alarm Hierarchy Component is also an alarm source. The example in Fig. 5 shows that an alarm is received by the Alarm Hierarchy Component and mapped to AHO 3. Then the alarm is propagated in accordance with the relationships between the AHOs to AhoO 5 and then to AHO 6. AHO 6 is configured to send a summary alarm the Alarm Service.The different alarm hierarchies in the Alarm Hierarchy Component are configurable.

## Claims

1. An alarm management system (AMS) installed on a site for managing alarm source components (ASC), comprising:
a) at least one alarm source component (ASC) installed on the site; said alarm source component (ASC) being configured to create an alarm source notification (COSA) when the alarm source component (ASC) identifies a fulfilment of one of a number of predefined alarm-types;
b) an alarm service business logic component (AS_BL) processing the incoming alarm source notifications (COSA) from the alarm source component (ASC) and outgoing alarm notifications (COA) to an alarm client component (AC) and being responsible for invoking a pertinent alarm state machine (ASM) when changes in an alarm source notification (COSA) occur;
c) an alarm service component (AS) comprising a number of alarm state machines (ASM) which are designed as a pluggable component ensuring an adaptability of the alarm service (AS); said alarm state machines (ASM) having an individual representation being stateless since the information of interest in the alarm state machines (ASM) is stored in alarm object instances; further comprising an alarm service configuration file being adjustable in order to implement and plug-in the alarm state machine components (ASM) ; and
d) a managed object component (MOC) being used as a repository for both the alarm types and the alarm object instances, comprising alarm related information generated by the alarm source component (ASC) and being represented by an alarm service object thereby acting as dispatcher for notifying changes in the alarm object.

2. The system according to claim 1, wherein an interface of the alarm state machines (ASM) provide at least one method for:
a) triggering an alarm processing state being used to process operation requests defined by an alarm service client (AC) ;
b) triggering an alarm source state being used to process alarm source notifications (COSA);
c) triggering an alarm treatment state being used to process treatment requests coming from the alarm service component (AS);
d) handling both standard and custom operation requests;
e) getting applicable commands for both the alarm source component (ASC) and the alarm type;
f) getting new alarm state; and
g) getting initial and final states being used by the alarm service business logic component (AS_BL) since each alarm state machine components (ASM) might have different state values for representing the initial and final state.

3. The system according to claim 1 or 2 wherein an operating procedure business logic component (OP BL) is further provided that manages operating procedure (OP) which enables an arbitrary combination of the alarm management of different alarm source components (ASC).

4. The system according to claim 3 wherein the operating procedure business logic component (OP BL) is operated by pluggable operating procedure state machines.

5. The system according to one of the preceding claims
wherein the alarm service business logic component (AS_BL) comprises an alarm hierarchy service (AHS); said alarm hierarchy service (AHS) being enabled to aggregate alarm source notifications (COSA) and to generate summery alarms by using directed acyclic graph topologies.

6. The system according to claim 5 wherein the alarm hierarchy service (AHS) supports the supply of alarm state machines (ASM) which determine the aggregation of the alarm source notifications (COSA) and the propagation thereof within the alarm service business logic component (AS_BL).

7. The system according to any of the preceding claims
wherein the alarm service configuration file being further adjustable to comprise the configuration file of the alarm source components (ASC).

8. The system according to claim 7 wherein the alarm source components (ASC) are configured in the alarm service business logic component (AS_BL) thereby enabling to add and/or remove an alarm source component (ASC) by downloading an amended configuration file of the alarm source components (ASC).
